# EUROPEAN PATENT APPLICATION

(11) **EP 1 416 307 A1**
(43) Date of publication of application: **06.05.2004**
(21) Application number: 02292718.0
(22) Date of filing: 31.10.2002
(51) Int. Cl.: G02B 17/06

(54) **Bidirectional telescope**

(71) Applicant: ALCATEL, 75008 Paris (FR)
(72) Inventor: Grassi, Elena, 20052 Monza (IT); Giovanni, Paoli, 23807 Merate (Lecco) (IT)
(74) Representative: Lamoureux, Bernard

(57) **Abstract**

Disclosed is a bi-directional telescope for a laser on air telecommunication system, the telescope comprising: a primary optical surface; at least one emission device forming at least one transmitting beam impinging against the primary optical surface at an at least one illuminated area, the at least one transmitting beam having a corresponding axis being the axis of the emission device; and a receiving device collecting the power deflected by an optical surface of the primary optical surface into a receiving beam, the receiving beam having an axis being the axis of the receiver configuration. The telescope is characterized in that the optical surface of the primary optical surface is larger than the at least one illuminated area and in that the transmitting beam axis does not coincide with the receiving beam axis. A method for receiving and transmitting optical signals through the air by a bi-directional telescope is also described.

## Description

The present invention pertains generally to electronic communications systems. More specifically, the present invention relates to communication systems which transmit and receive information signals that are carried by analog or digital modulation of laser light beams (Free Space Optical communication), including the case of multiple wavelength transmission (DWDM). Still more in particular, the present invention relates to a bi-directional use of a telescope in a transceiver for a bi-directional free space optics system.

The free space optics (briefly, FSO) telecommunication systems are known for transmitting a light signal through the air. The operation of such optical systems transmitting a modulated light signal is basically based on one or more lasers coupled to one or more lens (transmission side) and one or more lens for focusing the received laser beam on the detecting area of the receiver (receiver side).

In principle, a free space optical system used for carrying telecommunication information can take many advantages by using the same optical device both for the transmitting and the receiving paths.

In all the known FSO systems the receiving telescope for focusing the incoming wavefront on the active device must be as bigger as possible to keep the free space attenuation at a minimum value.

Generally, the addition of one (or more) telescope for generating the transmission beam results in an increase of the whole cost (because of the cost of the additional optics), and in an asymmetric increase of the mechanical size. The increased size is extremely negative from the point of view of the compactness that this kind of equipment normally needs to achieve.

Moreover, the possibility to use a single optical assembly for both directions facilitates the operation of setting and maintaining the parallelism between transmitting and receiving paths, that is an essential condition for the normal operation in a FSO bi-directional link.

Several arrangements are already known for providing the bi-directional use of an optical scheme, the more common being based on the concept of introducing traditional (plate or cube) beam-splitters inside the bi-directional path of the optical configuration.

The main problem connected with these known arrangements is that the full optical path, from the transmitter source to the receiver detector, is attenuated by the product of transmittance and reflectance ratios of the beam splitters.

It is easy to show that a minimum of 6 dB additional losses is obtained when transmittance and reflectance are both 50%. This loss could be compensated either by using a transmission source having a four-time power or by using a receiving optics having a diameter twice the diameter of a conventional receiving optics.

Finally, combination of the transmitting and the receiving paths can be done also by using two different wavelengths for the two directions and performing the beam-splitting of the full bi-directional path by means of dicroic filters or the like.

This kind of arrangement performs better from the point of view of losses. Depending on transmittance and reflectance of the filters, losses can be around 2 dB. The disadvantage is constituted by the need to use two different equipments or different settings for the transmission and receiving sides of a given hop.

In fact, if one side of the hop has λ1 for transmission and λ2 is for reception, in the opposite side shall be inverted. Also the dicroic filter must be different (e.g., long pass and short pass inverted) or with different mounting (e.g.: different mechanical positioning of the Tx and Rx devices).

It is clear that, from a point of view of managing both production and installation, the above solution is not fully positive.

A further interesting solution is disclosed in EP 0 977 070 A1 by TRW. According such a solution, the central part of the main mirror, in a Cassegrain-like configuration, is used as transmitting optics and the rest for collecting power at the receiving side.

This is obtained by the use of a ring-like flat mirror, which is used as combiner in the sense that the generated transmission beam optical path is passing through a central hole and the reflecting ring deflects the receiving path to the detector assembly.

Advantageously, this solution reduces drastically the transmission and receiving losses. In fact, for the Rx, losses are reduced by 25%, due to the fact that half of the diameter of the main mirror is used for transmission, whereas the Tx losses due to the secondary mirror obstruction can be of the order of 15%.

Consequently, the additional loss relative to this solution can be reduced up to less than 2 dB. Obviously, reducing losses is an advantageous feature but this optical scheme suffers a rather unpleasant inconvenience. It could be noticed that the secondary mirror results in an obstruction. In other words, if the beam is transmitted with a slight divergence, an enlarging shadow due to the secondary mirror will be generated and projected.

Even if, for instance, the divergence is of 0.5 millirad only, after 400 meters this shadow will be bigger (20 cm, plus the size of the secondary mirror) than the receiving mirror. This means loosing the signal completely when you are perfectly aligned.

In conclusion, the arrangement according to EP 0 977 070 A1 works only if the divergence of the beam is virtually zero, or in other words the beam size at the receiver end shall be roughly equal to the receiver diameter. But from the practice of free space optics it is well known that this situation is rather hard to be obtained.

In view of the above known and disclosed prior-art solutions, the main object of the present invention is providing a telescope for a free space optical communication system operable in a bi-directional manner and keeping at a minimum the additional optical path losses.

A further object of the present invention is providing a bi-directional telescope for a free space optical communication system avoiding the shadow of secondary mirror inside the transmitted beam.

A still further object of the present invention is providing a bi-directional telescope for a free space optical communication system avoiding the use of different wavelengths between the two direction of the optical path.

These and further objects are obtained by a bi-directional telescope for a free space optical communication system according to claim 1 and by a method according to claim 6. Further advantageous features of the present invention are set forth in the respective dependent claims. All the claims are intended to be an integral part of the present description.

In a free space optics telecommunication system according to the present invention, each terminal includes an optical surface (telescope) used both for the transmitting and the receiving path. This is obtained by using a minor part the optical surface for transmission, leaving the major surface to the reception. Furthermore, according to the invention, the surface exploited for transmitting is off-axis.

This allows the bi-directional use of a telescope, thus keeping at the minimum the optical path losses and avoiding the shadow of secondary mirror (when present in the optical scheme) inside the transmitted beam.

There now follow a detailed description of some embodiments of the present invention, given by way of exemplification and not of limitation, to be read with reference to the attached drawings, wherein:
- Fig. 1 shows a schematic side view of a first embodiment of bi-directional telescope for a free space optics telecommunication system according to the present invention;
- Fig. 2 shows a schematic front view thereof;
- Fig. 3 shows a schematic side view of a second embodiment of bi-directional telescope for a free space optics telecommunication system according to the present invention;
- Fig. 4 shows a schematic front view thereof;
- Fig. 5 shows a schematic side view of a third embodiment of bi-directional telescope for a free space optics telecommunication system according to the present invention; and
- Fig. 6 shows a schematic front view thereof.

The present invention could be implemented in several different ways according to the various optical schemes. In principle the idea according to the present invention can be applied to all known optical schemes but because the problem of the shadow in the transmitted beam is relevant to most of reflective schemes, only arrangements that does not result in a shadowed transmitted beam will be shown and described as preferred embodiments.

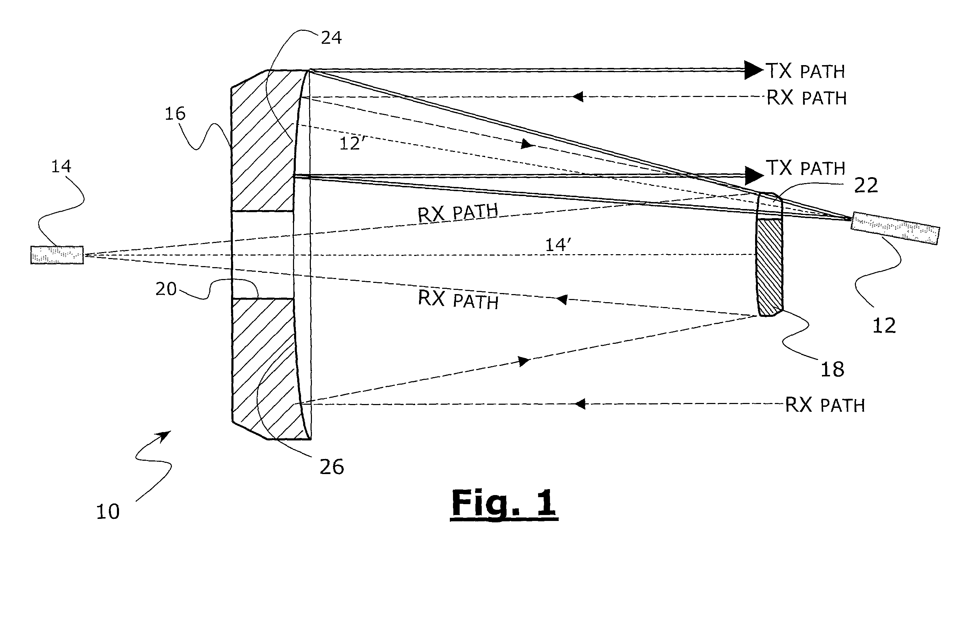

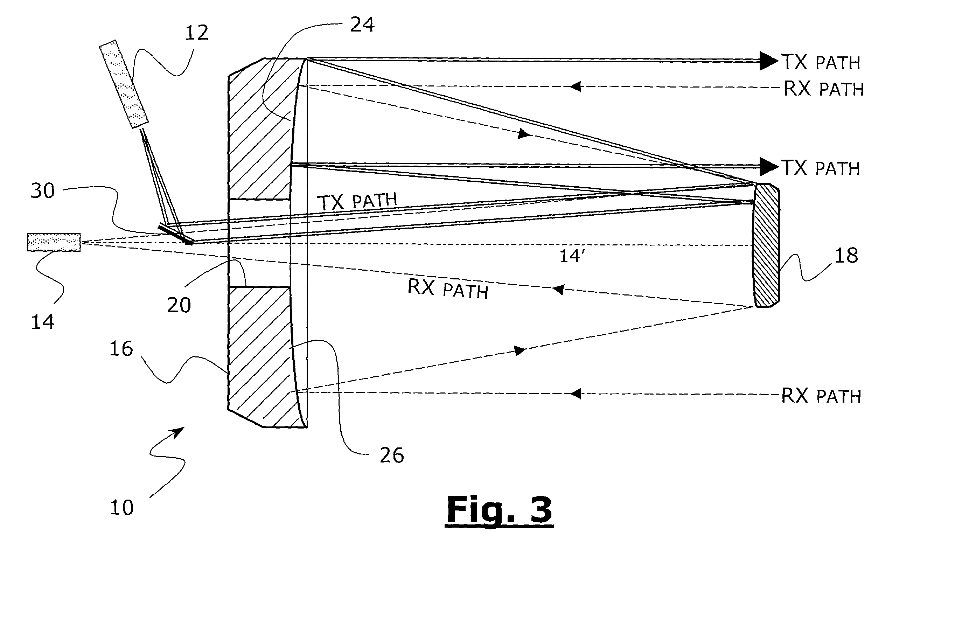

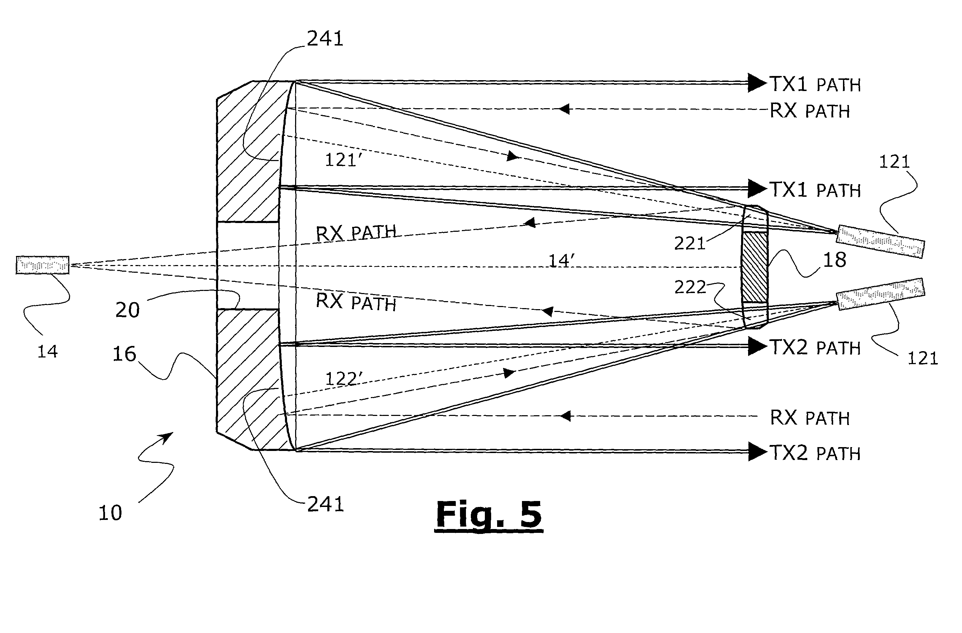

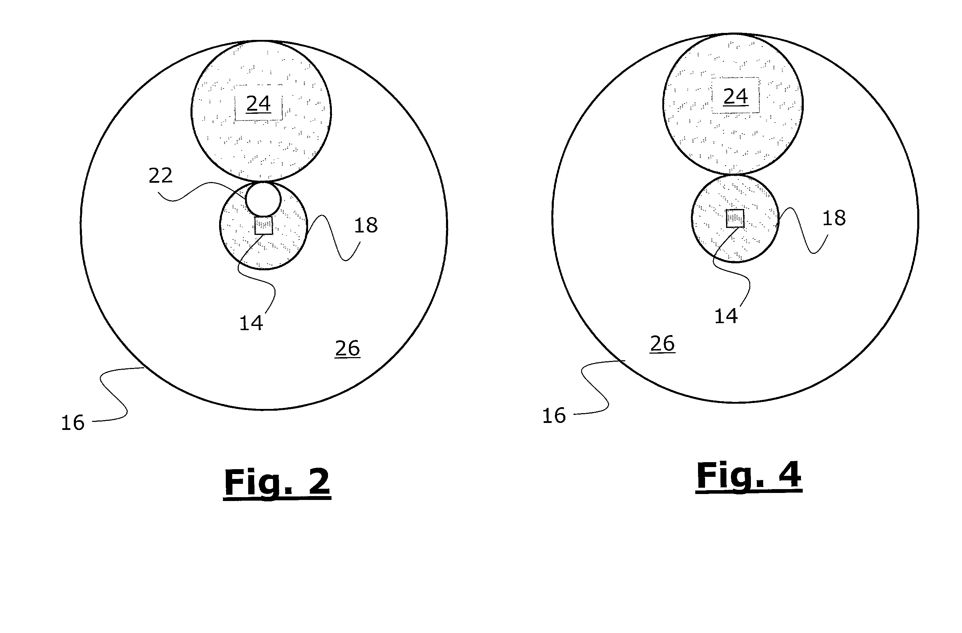

Figures 1-4 show two preferred embodiments of the present invention. In particular, Figures 1 and 2 show a true Cassegrain optical scheme. Still in particular, Fig. 1 shows a schematic side view of a first embodiment of bi-directional telescope for a free space optics telecommunication system according to the present invention. The telescope 10 of Fig. 1 comprises an optical transmitting device 12, an optical receiving device 14, a primary mirror 16 and a secondary mirror 18. Both the optical transmitting device 12 and the optical receiving device 14 could be laser diodes or optical fibers. Primary mirror 16 is parabolic and secondary mirror 18 is hyperbolic.

The primary mirror 16 is provided with a hole 20 concentric with the primary mirror 16. Also the secondary mirror is provided with an hole 22. The optical receiver device (diode or fiber) 14 is located in the focus of the whole configuration (primary mirror and secondary mirror).

The transmitter device (laser or fiber) 12 is located at the focus of the primary mirror 16, and it transmits through the hole 22 in the secondary mirror 18. The area that becomes illuminated by the transmitter device is 24.

The axis 12' of the emission device 12 shall be orthogonal to the surface of the primary mirror 16 in the center of the illuminated area 24. In this case the transmitted beam will be off the center of the primary mirror 16, but parallel to the axis 14' of the receiver configuration.

If we use an emission device 12 with a numeric aperture less than a certain value (for instance a single mode fiber 0.12), the primary mirror hole 20 can be more than twice. In this case, it will be possible to avoid any additional optic to obtain the collimation of the transmit beam.

When this is not the case (for instance when the emission is given directly from a laser diode 12), a beam expander (not shown) at the source 12, to give the correct divergence of the beam to be matched with the aperture of the relevant optical scheme, should be used.

The arrangement of Figures 1 and 2 works also with others reflective optical configurations that use parabolic primary mirror surface, for example the Newton reflector optical scheme.

Thus, laser light emitted by transmitting device 12 forms a transmitting beam (indicated by a dual line) impinging against the reflective surface of primary mirror 16 at the illuminated area 24; a TX path is thus formed in a direction parallel to the telescope axis 14' (see reference sign "TX PATH"). The received laser light (indicated by hatched lines and by the reference sign "RX PATH") that is reflected by the whole reflecting surface 26 of primary mirror 16, excluding transmitting area 24, is focused by secondary mirror 18 towards the optical receiving device 14, passing through the hole 20.

Thus, according to the first embodiment of the present invention, the whole area 26 of primary mirror 16 is used for receiving a light beam carrying a signal while only area 24 (which is minor in comparison with area 26) is used for transmitting a laser signal through the air.

In Fig. 3 a further preferred embodiment of the present invention is shown. The same or similar reference numbers have been used for indicating the same or functionally equivalent parts. The arrangement of Figs. 3 and 4 is advantageous with respect to the one of Figs. 1 and 2 as there is no need to make a hole in the secondary mirror 18. The man skilled in the art will realize that such a second embodiment provides the same illuminated area 24 as in the previous arrangement.

Differently from the first embodiment, the light emitting device 12 is placed behind the primary mirror 16 and the transmitting beam is deflected by a 90° prism (or mirror) 30.

Also such a second embodiment is in agreement with the basic idea according to the present invention, namely the largest part 26 of the primary mirror 16 is used for receiving and the smallest one 24 is used for transmitting. Furthermore, the center of transmitting area 24 does not coincide with the center of receiving area 26.

In principle, this second solution is applicable to all possible optical configurations (even refractive or catadioptric) and requires an off-axis prism (or flat mirror) 30. Possibly, it further requires a beam expander at the source 12 to give the right divergence of the beam to be matched to the aperture of the relevant optical scheme.

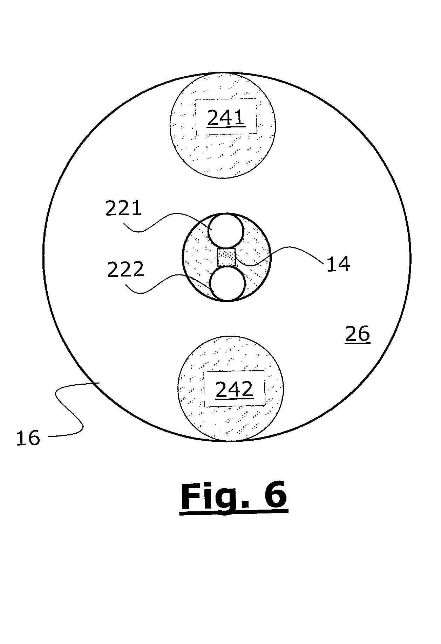

The application of the above basic principles may not be necessarily limited to a single transmitter. Figures 5 and 6 show a possible implementation of a bi-directional telescope according to the present invention when it is used with two transmitting devices 121 and 122. Correspondingly, two holes 221 and 222 are provided in the secondary mirror 18 for letting the two transmitting beams (see TX1 PATH and TX2 PATH) to pass through the secondary mirror itself.

The two transmitting beams form two corresponding illuminated areas 241, 242 on the surface of the primary mirror 16. Preferably, proper focusing lenses at each of the multiple transmitters 121, 122 may be inserted for exploiting small surface for each transmitter. Through such an arrangement, it will be still possible to maintain the overall losses below a desired value.

Also the above described second embodiment can be easily implemented with two (or more) transmitters by providing two or more corresponding off-axis prisms (or flat mirrors) 30.

The solution according to the present invention uses the smaller area of the main collecting surface for the transmission and leaves the largest area for the reception, further exploiting the concept of off-axis optic transmission.

The main advantage is to keep at the minimum the additional optical path losses (to less than 1.0 dB, Tx+Rx) and, at the same time, to avoid the shadow of secondary mirror inside the transmitted beam. It also avoids the needs to use of different wavelength between the two directions of the path.

In general terms, the present invention, some embodiments of which have been described in detail, relates to a bi-directional telescope for a laser on air telecommunication system. The telescope comprises: a primary optical surface (for instance, a mirror or lens 16); at least one transmitting device 12; 121, 122 forming at least one transmitting beam impinging against the primary optical surface 16 at an at least one illuminated area 24; 241, 242, the at least one transmitting beam having a corresponding axis 12'; 121', 122'; and a receiving device 14 collecting the power deflected by an optical surface 26 of the primary optical surface 16 into a receiving beam, the receiving beam having an axis 14'. The telescope is characterized in that the optical surface 26 of the primary optical surface 16 is larger than the at least one illuminated area 24; 241, 242 and in that the transmitting beam axis 12'; 121', 122' does not coincide with the receiving beam axis 14'.

Advantageously, the telescope according to the present invention comprises a secondary optical surface (for instance, a mirror or lens 18), wherein the received power deflected by the optical surface 26 of the primary optical device 16 is focused by the secondary optical surface into the receiving beam.

The present invention also relates to a method for transmitting and receiving optical signals through the air by a single bi-directional telescope. The method comprises the steps of: providing a primary optical surface; providing at least one transmitting device forming at least one transmitting beam impinging against the primary mirror at an at least one illuminated area, the at least one transmitting beam having a corresponding axis; and providing a receiving device collecting the power deflected by an optical surface of the primary optical surface into a receiving beam, the receiving beam having an axis. The method is characterized in that the optical surface is larger than the at least one illuminated area and in that the transmitting beam axis does not coincide with the receiving beam axis.

There have thus been shown and described a novel bi-directional telescope and a novel method which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention are deemed to be covered by the invention which is limited only by the claims which follow.

## Claims

1. Bi-directional telescope for a laser on air telecommunication system, the telescope comprising:
a primary optical surface (16);
at least one transmitting device (12; 121, 122) forming at least one transmitting beam impinging against the primary optical surface (16) at an at least one illuminated area (24; 241, 242), the at least one transmitting beam having a corresponding axis (12'; 121', 122');
a receiving device (14) collecting the power deflected by an optical surface (26) of the primary optical surface (16) into a receiving beam, the receiving beam having an axis (14');
**characterized in that** the optical surface (26) of the primary optical surface (16) is larger than the at least one illuminated area (24; 241, 242) and **in that** the transmitting beam axis (12'; 121', 122') does not coincide with the receiving beam axis (14').

2. Telescope according to claim 1, **characterized in that** it further comprises a secondary optical surface (18), wherein the received power deflected by the optical surface (26) of the primary optical surface (16) is focused by the secondary optical surface into the receiving beam.

3. Telescope according to claim 1 or 2, **characterized in that** said primary optical surface comprises a hole (20).

4. Telescope according to any of claims 2-3, **characterized in that** said at least one transmitting device (12; 121, 122) is placed fundamentally in front of the reflecting surface (26), behind the secondary optical surface (18) and **in that** the secondary optical surface (18) comprises holes (22; 221, 222).

5. Telescope according to any of claims 1-3, **characterized in that** said at least one transmitting device (12; 121, 122) is placed fundamentally behind the reflecting surface (26) and **in that** it further comprises means (30) for deflecting the transmitting beam towards the secondary optical surface (18).

6. Method for receiving-transmitting an optical signal through a bi-directional telescope for a laser on air telecommunication system, the method comprising:
providing a primary optical surface (16);
providing at least one transmitting device (12; 121, 122) forming at least one transmitting beam impinging against the primary mirror (16) at an at least one illuminated area (24; 241, 242), the at least one transmitting beam having a corresponding axis (12'; 121', 122');
providing a receiving device (14) collecting the power deflected by an optical surface (26) of the primary optical surface (16) into a receiving beam, the receiving beam having an axis (14');
**characterized in that** the optical surface (26) is larger than the at least one illuminated area (24; 241, 242) and **in that** the transmitting beam axis (12'; 121', 122') does not coincide with the receiving beam axis (14').

7. Method according to claim 6, **characterized by** further comprising the step of providing a secondary optical surface (18), wherein the received power deflected by the optical surface (26) of the primary optical surface (16) is focused by the secondary optical surface into the receiving beam.

8. Method according to claim 6 or 7, **characterized by** further comprising the step of making a hole (20) in said primary optical surface.

9. Method according to any of claims 7-8, **characterized by** placing said at least one transmitting device (12; 121, 122) fundamentally in front of the reflecting optical surface (26), behind the secondary optical surface (18) and making at least one hole (22; 221, 222) in the secondary optical surface (18).

10. Method according to any of claims 7-8, **characterized by** placing said at least one transmitting device (12; 121, 122) fundamentally behind the reflecting optical surface (26) and by providing means (30) for deflecting the transmitting beam towards the secondary optical surface (18).
